# EUROPEAN PATENT APPLICATION

(11) **EP 4 362 586 A1**
(43) Date of publication of application: **01.05.2024**
(21) Application number: 22204166.7
(22) Date of filing: 27.10.2022
(51) Int. Cl.: H04W 72/04, H04W 72/40, H04W 76/14, H04W 72/12

(54) **APPARATUS, METHOD, AND COMPUTER PROGRAM**

(71) Applicant: Nokia Technologies Oy, 02610 Espoo (FI)
(72) Inventor: PANZNER, Berthold, 83607 Holzkirchen (DE); SHIMIZU, Takayuki, Mountain View, 94043 CA (US); KIILERICH PRATAS, Nuno Manual, 9260 Gistrup (DK); SUNELL, Kai-Erik, 06160 Antibes (FR); ARZELIER, Claude, 30410 Molieres-sur-Ceze (FR)
(74) Representative: Page White Farrer

(57) **Abstract**

The disclosure relates to an apparatus comprising: means for determining (1100), by a sidelink manager, a first resource allocation used by a first module for performing sidelink communications via a first radio access technology; means for determining (1102), by the sidelink manager, a second resource allocation used by a second module for performing sidelink communications via a second radio access technology; means for determining (1104), by the sidelink manager, a resource allocation conflict based on the first resource allocation and the second resource allocation; means for converting (1106), by the sidelink manager, the first resource allocation into a converted first resource allocation compatible with the second radio access technology or the second resource allocation into a converted second resource allocation compatible with the first radio access technology; and means for sending (1108), by the sidelink manager, the converted first resource allocation to the second module or the converted second resource allocation to the first module.

## Description

### Field of the disclosure

The present disclosure relates to an apparatus, a method, and a computer program for managing sidelink communications in a heterogeneous communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising: means for determining, by a sidelink manager, a first resource allocation used by a first module for performing sidelink communications via a first radio access technology; means for determining, by the sidelink manager, a second resource allocation used by a second module for performing sidelink communications via a second radio access technology; means for determining, by the sidelink manager, a resource allocation conflict based on the first resource allocation and the second resource allocation; means for converting, by the sidelink manager, the first resource allocation into a converted first resource allocation compatible with the second radio access technology or the second resource allocation into a converted second resource allocation compatible with the first radio access technology; and means for sending, by the sidelink manager, the converted first resource allocation to the second module or the converted second resource allocation to the first module.

The apparatus may be core network element; or the apparatus may be a user equipment capable of performing sidelink communications via the first radio access technology and capable of performing sidelink communications via the second radio access technology.

The first module and the second module may be part of the apparatus.

The first module may be part of a first apparatus capable of performing sidelink communications via the first radio access technology and not capable of performing sidelink communications via the second radio access technology; and the second module may be part of a second apparatus not capable of performing sidelink communications via the first radio access technology and capable of performing sidelink communications via the second radio access technology.

The first radio access technology may comprise long term evolution.

The second radio access technology may comprise new radio.

The first resource allocation may be received from the first module in first sidelink control information or first inter-user equipment coordination information or derived from sensing results from the first module; and/or the second resource allocation may be received from the second module in second sidelink control information or second inter-user equipment coordination information or derived from sensing results from the second module.

The apparatus may comprise: means for generating, by the sidelink manager, a first pseudo sidelink control information or a first pseudo inter-user equipment coordination information including the converted first resource allocation; or means for generating, by the sidelink manager, a second pseudo sidelink control information or a second pseudo inter-user equipment coordination information including the converted second resource allocation.

The first pseudo sidelink control information or the first pseudo inter-user equipment coordination information may mimic the second sidelink control information or the second inter-user equipment coordination information. That is, the first pseudo sidelink control information or the first pseudo inter-user equipment coordination information may appear to have been sent from the second module. For example, the first pseudo sidelink control information or the first pseudo inter-user equipment coordination information may have the same format as the second sidelink control information or the second inter-user equipment coordination information.

The second pseudo sidelink control information or the second pseudo inter-user equipment coordination information may mimic the first sidelink control information or the first inter-user equipment coordination information. That is, the second pseudo sidelink control information or the second pseudo inter-user equipment coordination information may appear to have been sent from the first module. For example, the second pseudo sidelink control information or the second pseudo inter-user equipment coordination information may have the same format as the first sidelink control information or the first inter-user equipment coordination information.

The first pseudo sidelink control information or the first pseudo inter-user equipment coordination information may not comprise an indication that the first pseudo sidelink control information or the first pseudo inter-user equipment coordination information originates from the apparatus; or the second pseudo sidelink control information or the second pseudo inter-user equipment coordination information may not comprise an indication that the second pseudo sidelink control information or the second pseudo inter-user equipment coordination information originates from the apparatus.

That is, the first module may not be aware that the first pseudo sidelink control information or the first pseudo inter-user equipment coordination information is a pseudo sidelink control information or pseudo inter-user equipment coordination information originating from the apparatus rather than an original sidelink control information or inter-user equipment coordination information originating from another first module.

The second module may not be aware that the second pseudo sidelink control information or the second pseudo inter-user equipment coordination information is a pseudo sidelink control information or pseudo inter-user equipment coordination information originating from the apparatus rather than an original sidelink control information or inter-user equipment coordination information originating from another second module.

The first pseudo sidelink control information or the first pseudo inter-user equipment coordination information may comprise an indication that the first pseudo sidelink control information or the first pseudo inter-user equipment coordination information originates from the apparatus rather than from another first module; or the second pseudo sidelink control information or the second pseudo inter-user equipment coordination information may comprise an indication that the second pseudo sidelink control information or the second pseudo inter-user equipment coordination information originates from the apparatus rather than from another second module.

That is, the first module may be aware that the first pseudo sidelink control information or the first pseudo inter-user equipment coordination information is a pseudo sidelink control information or pseudo inter-user equipment coordination information originating from the apparatus rather than an original sidelink control information or inter-user equipment coordination information originating from another first module.

The second module may be aware that the second pseudo sidelink control information or the second pseudo inter-user equipment coordination information is a pseudo sidelink control information or pseudo inter-user equipment coordination information originating from the apparatus rather than an original sidelink control information or inter-user equipment coordination information originating from another second module.

The indication may be conveyed via a flag (single bit indicator).
The apparatus may comprise: means for sending, by the sidelink manager, the first pseudo sidelink control information or the first pseudo inter-user equipment coordination information to the second module; or means for sending, by the sidelink manager, the second pseudo sidelink control information or the second pseudo inter-user equipment coordination information to the first module.

The apparatus may comprise: means for determining, by the sidelink manager, a need to address the resource allocation conflict based on at least one of: a distance between receivers associated with the first module and the second module, an interference level experienced by receivers associated with the first module and the second module or a probability of retransmission at the first module and the second module; and means for converting, by the sidelink manager, the first resource allocation or the second resource allocation in response to determining the need to address the resource allocation conflict.

The apparatus may comprise: means for determining whether to convert the first resource allocation or the second resource allocation in response to determining the need to address the resource allocation conflict based on a priority between the first module and the second module.

The apparatus may comprise: means for determining, by the sidelink manager, the distance between receivers associated with the first module and the second module based on basic safety messages or cooperative awareness messages received from the first module and the second module.

The means may comprise: at least one processor; and at least one memory storing instructions that, when executed by the at least one processor, cause the performance of the apparatus.

According to an aspect there is provided an apparatus comprising at least one processor and at least one memory storing instructions that, when executed by the at least one processor, cause the apparatus at least to: determine, by a sidelink manager, a first resource allocation used by a first module for performing sidelink communications via a first radio access technology; determine, by the sidelink manager, a second resource allocation used by a second module for performing sidelink communications via a second radio access technology; determine, by the sidelink manager, a resource allocation conflict based on the first resource allocation and the second resource allocation; convert, by the sidelink manager, the first resource allocation into a converted first resource allocation compatible with the second radio access technology or the second resource allocation into a converted second resource allocation compatible with the first radio access technology; and send, by the sidelink manager, the converted first resource allocation to the second module or the converted second resource allocation to the first module.

According to an aspect there is provided an apparatus comprising circuitry configured to: determine, by a sidelink manager, a first resource allocation used by a first module for performing sidelink communications via a first radio access technology; determine, by the sidelink manager, a second resource allocation used by a second module for performing sidelink communications via a second radio access technology; determine, by the sidelink manager, a resource allocation conflict based on the first resource allocation and the second resource allocation; convert, by the sidelink manager, the first resource allocation into a converted first resource allocation compatible with the second radio access technology or the second resource allocation into a converted second resource allocation compatible with the first radio access technology; and send, by the sidelink manager, the converted first resource allocation to the second module or the converted second resource allocation to the first module.

According to an aspect there is provided a method comprising: determining, by a sidelink manager, a first resource allocation used by a first module for performing sidelink communications via a first radio access technology; determining, by the sidelink manager, a second resource allocation used by a second module for performing sidelink communications via a second radio access technology; determining, by the sidelink manager, a resource allocation conflict based on the first resource allocation and the second resource allocation; converting, by the sidelink manager, the first resource allocation into a converted first resource allocation compatible with the second radio access technology or the second resource allocation into a converted second resource allocation compatible with the first radio access technology; and sending, by the sidelink manager, the converted first resource allocation to the second module or the converted second resource allocation to the first module.

According to an aspect there is provided a computer program
comprising computer executable code which when run on at least one processor is configured to: determine, by a sidelink manager, a first resource allocation used by a first module for performing sidelink communications via a first radio access technology; determine, by the sidelink manager, a second resource allocation used by a second module for performing sidelink communications via a second radio access technology; determine, by the sidelink manager, a resource allocation conflict based on the first resource allocation and the second resource allocation; convert, by the sidelink manager, the first resource allocation into a converted first resource allocation compatible with the second radio access technology or the second resource allocation into a converted second resource allocation compatible with the first radio access technology; and send, by the sidelink manager, the converted first resource allocation to the second module or the converted second resource allocation to the first module.

According to an aspect there is provided an apparatus comprising: means for sending, from a first module performing sidelink communications via a first radio access technology to a sidelink manager, a first resource allocation or first sensing results; means for receiving, by the first module from the sidelink manager, a converted second resource allocation compatible with the first radio access technology; and means for determining, by the first module, to adjust the first resource allocation based on the converted second resource allocation.

The apparatus may be a user equipment capable of performing sidelink communications via the first radio access technology and capable of performing sidelink communications via the second radio access technology or the apparatus may be a user equipment capable of performing sidelink communications via the first radio access technology and not capable of performing sidelink communications via the second radio access technology.

The apparatus may comprise: means for adjusting, by the first module, the first resource allocation based on the converted second resource allocation; and means for using, by the first module, the adjusted first resource allocation.

Adjusting the first resource allocation based on the converted second resource allocation may comprise excluding resources from the first resource allocation that are included in the converted second resource allocation.

The means may comprise: at least one processor; and at least one memory storing instructions that, when executed by the at least one processor, cause the performance of the apparatus.

According to an aspect there is provided an apparatus comprising at least one processor and at least one memory including computer code for one or more programs, the at least one memory and the computer code configured, with the at least one processor, to cause the apparatus at least to: send, from a first module performing sidelink communications via a first radio access technology to a sidelink manager, a first resource allocation or first sensing results; receive, by the first module from the sidelink manager, a converted second resource allocation compatible with the first radio access technology; and determine, by the first module, to adjust the first resource allocation based on the converted second resource allocation.

According to an aspect there is provided an apparatus comprising circuitry configured to: send, from a first module performing sidelink communications via a first radio access technology to a sidelink manager, a first resource allocation or first sensing results; receive, by the first module from the sidelink manager, a converted second resource allocation compatible with the first radio access technology; and determine, by the first module, to adjust the first resource allocation based on the converted second resource allocation.

According to an aspect there is provided a method comprising: sending, from a first module performing sidelink communications via a first radio access technology to a sidelink manager, a first resource allocation or first sensing results; receiving, by the first module from the sidelink manager, a converted second resource allocation compatible with the first radio access technology; and determining, by the first module, to adjust the first resource allocation based on the converted second resource allocation.

According to an aspect there is provided a computer program comprising computer executable code which when run on at least one processor is configured to: send, from a first module performing sidelink communications via a first radio access technology to a sidelink manager, a first resource allocation or first sensing results; receive, by the first module from the sidelink manager, a converted second resource allocation compatible with the first radio access technology; and determine, by the first module, to adjust the first resource allocation based on the converted second resource allocation.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BS:: Base Station
- CU:: Centralized Unit
- DL:: Downlink
- DU:: Distributed Unit
- FDM:: Frequency Division Multiplexing
- gNB:: gNodeB
- GSM:: Global System for Mobile communication
- HSS:: Home Subscriber Server
- loT:: Internet of Things
- IUC:: Inter user equipment coordination
- LTE:: Long Term Evolution
- MAC:: Medium Access Control
- MS:: Mobile Station
- MTC:: Machine Type Communication
- NEF:: Network Exposure Function
- NF:: Network Function
- NR:: New radio
- NRF:: Network Repository Function
- PDU:: Packet Data Unit
- PHY:: Physical
- PSCCH:: Physical Sidelink Control Channel
- PSSCH:: Physical Sidelink Shared Channel
- RAM:: Random Access Memory
- (R)AN:: (Radio) Access Network
- RAT:: Radio Access Technology
- ROM:: Read Only Memory
- RSRP:: Reference Signal Received Power
- RSRQ:: Reference Signal Received Quality
- SC-FDMA:: Single Carrier Frequency Division Multiple Access
- SCI:: Sidelink Control Information
- SL:: Sidelink
- SMF:: Session Management Function
- TDM:: Time Division Multiplexing
- TR:: Technical Report
- TS:: Technical Specification
- UE:: User Equipment
- UMTS:: Universal Mobile Telecommunication System
- V2X:: Vehicle to Everything
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a heterogeneous communication system comprise type A user equipment, type B user equipment and type C user equipment;
Figure 5 shows a schematic representation of a resource allocation conflict in an heterogeneous communication system;
Figure 6 shows a schematic representation of static, semi-static or dynamic resource allocations to perform sidelink communications in a heterogeneous communication system;
Figure 7 shows a schematic representation a heterogeneous communication system with a resource allocation conflict;
Figure 8 shows a schematic representation a heterogeneous communication system without a resource allocation conflict;
Figure 9 shows a chart of a process for managing sidelink communications in a heterogeneous communication system;
Figure 10 shows a signalling diagram of a method for managing sidelink communications in a heterogeneous communication system;
Figure 11 shows a block diagram of a method for managing sidelink communications in a heterogeneous communication system, for example performed by a core network element or a type A user equipment;
Figure 12 shows a block diagram of a method for managing sidelink communications in a heterogeneous communication system, for example performed by a type A user equipment, a type B user equipment or a type C user equipment; and
Figure 13 shows a schematic representation of a non-volatile memory medium storing instructions which when executed by a processor allow a processor to perform one or more of the steps of the methods of Figures 11 and 12.

### Detailed Description of the Figures

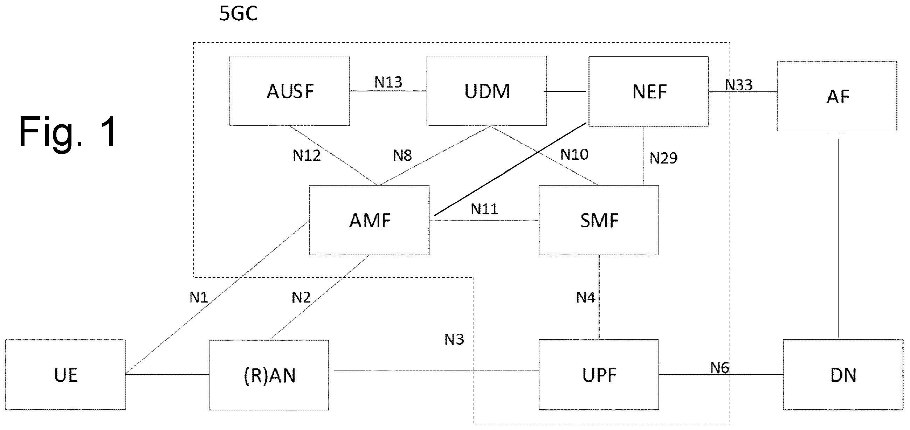

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

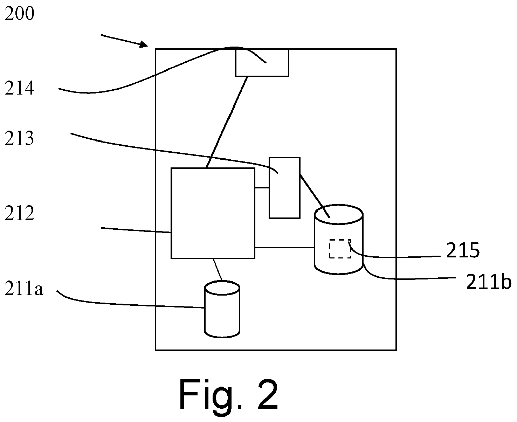

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

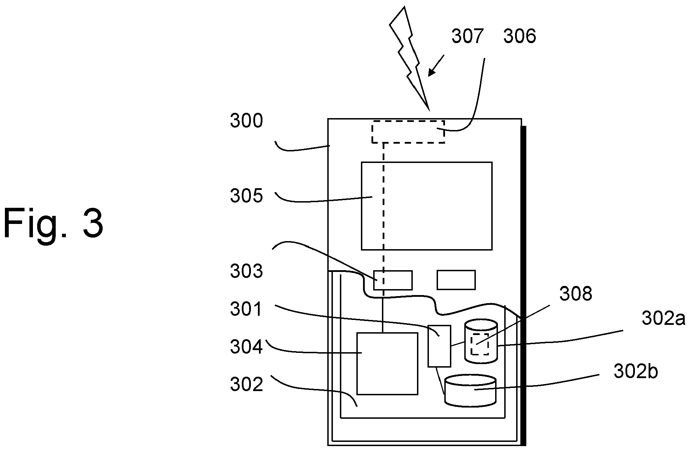

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relates to managing sidelink (SL) communications in a heterogeneous communication network.

RP-221798 lists various objectives for managing SL communications in a heterogeneous communication network and reads as follows.
*"4. Study and specify, if necessary, mechanism(s) for co-channel coexistence*
*for LTE sidelink and NR sidelink including performance, necessity, feasibility,*
*and potential specification impact if any [RAN1, RAN2, RAN4]*
   - *Reuse the in-device coexistence framework defined in Rel-16* as *much* as *possible"*

R1-2208096 provides a summary of the submitted contributions, email discussion topics and outcomes during RAN1#110 meeting for AI 9.4.2

In a vehicle to everything (V2X) scenario, LTE UEs and NR UEs may coexist in a heterogeneous communication system. The LTE UEs may perform direct SL communications via LTE with other LTE UEs over a PC5 interface. The NR UEs may perform direct SL communications via NR with other NR UEs over a PC5 interface. The LTE UEs may not perform direct SL communications via LTE with other NR UEs over a PC5 interface. The NR UEs may not perform direct SL communications via NR with other LTE UEs over a PC5 interface.

When the LTE UEs perform direct SL communications with LTE UEs and the NR UEs perform direct SL communications with NR UEs on a same carrier (e.g. the ITS 5.9GHz frequency band), the resource allocation for SL communications via LTE and the resource allocation for SL communications via NR may overlap causing a resource allocation conflict and interference at the LTE UEs and the NR UEs.

The NR UEs may send NR SL control information (SCI). The NR SCI may include an indication of the resource allocation for SL communications via NR. The NR SCI may comprise a first stage and a second stage.

The first stage of the NR SCI format 1-A is defined in 3GPP TS 38.212 section 8.3.1.1 by the following information fields.

### "- Priority - 3 bits

- *Frequency resource assignment* - *up to 13bits (depending on number of allocated subchannels)*
- *Time resource assignment* - *5 bits when the value of the higher layer parameter sl-MaxNumPerReserve is configured to 2; otherwise 9 bits when the value of the higher layer parameter sl-MaxNumPerReserve is configured to 3*
- *Resource reservation period -┌log2 Nrsv_period┐ bits* as *defined in clause 8.1.4 of [6, TS 38*. *214], where Nrsv_period is the number of entries in the higher layer parameter sl-ResourceReservePeriodList, if higher layer parameter sl-MultiReserveResource is configured; 0 bit otherwise.-*- *DMRS pattern* - *┌log2 Npattern┐ bits* as *defined in clause 8.4.1.1.2 of [4, TS 38.211], where Npattern is the number of DMRS patterns configured by higher layer parameter sl-PSSCH-DMRS-TimePatternList; 0 bit if sIPSSCH-DMRS-TimePatternList is not configured.*
- *2nd -stage SCI format* - *2 bits*
- *Beta_offset indicator* - *2 bits*
- *Number of DMRS port* - *1 bit*
- *Modulation and coding scheme* - *5 bits*
- *Additional MCS table indicator* - *1 bit if one MCS table is configured by higher layer parameter sl-Additional-MCS-Table; 2 bits if two MCS tables are configured by higher layer parameter sl- Additional-MCS-Table; 0 bit otherwise.*
- *PSFCH overhead indication* - *1 bit if higher layer parameter sIPSFCH-Period = 2 or 4; 0 bit otherwise".*

The LTE UEs may send LTE SCI. The LTE SCI may include an indication of the resource allocation for SL communication via UE.

The LTE SCI format 0 is defined in 3GPP TS 36.212 section 5.4.3.1.1 by the following information fields.

### "- Frequency hopping flag - 1 bit

- *Resource block assignment and hopping resource allocation for PSSCH hopping and for non-hopping PSSCH*
- *Time resource pattern* - *7 bits*
- *Modulation and coding scheme* - *5 bits*
- *Timing advance indication* - *11 bits*
- *Group destination ID* - *8 bits"*

The LTE SCI format 1 is defined in 3GPP TS 36.212 section 5.4.3.1.2 by the following information fields.

### "- Priority - 3 bits

- *Resource reservation* - *4 bits*
- *Frequency resource location of initial transmission and retransmission*
- *Time gap between initial transmission and retransmission* - *4 bits*
- *Modulation and coding scheme* - *5 bits*
- *Retransmission index* - *1 bit*
- *Transmission format- 1 bit, where value 1 indicates a transmission format including rate-matching and TBS scaling, and value 0 indicates a transmission format including puncturing and no TBS-scaling. This field is only present if the transport mechanism selected by higher layers indicates the support of rate matching and TBS scaling.*
- *Reserved information bits are added until the size of SCI format 1 is equal to 32 bits. The reserved bits are set to zero".*

SL communications via LTE and SL communications via NR may comprise incompatibilities which makes it difficult, if not impossible for the LTE UEs to decode (i.e. understand) the NR SCI and for the NR UEs to decode (i.e. understand) the LTE SCI. For example, the frame structure of SL communications via LTE may be different than the frame structure of SL communications via NR. Moreover, the waveform of SL communications via LTE may be different than the waveform of SL communications via NR. Typically, SL communications via LTE may use single carrier frequency division multiple access (SC-FDMA) whereas SL communications via NR may use digital Fourier transform spread orthogonal frequency division multiplexing (DFT-s-OFDM).

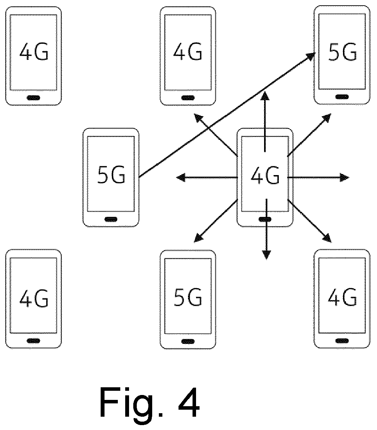

Figure 4 shows a heterogenous communication network comprising type B UEs and type C UEs. A type B UE may be capable of performing SL communications via NR only. A type C may be capable of performing SL communication via LTE only. By contrast, a type A UE (not illustrated) may be capable of performing SL communications via LTE and NR.

SL communications via NR may be unicast, groupcast or broadcast SL communications. SL communications via LTE may be broadcast SL communications only.

Figures 4 shows a scenario wherein type B UEs use a resource allocation to perform unicast SL communications via NR and wherein type C UEs use a resource allocation to perform broadcast SL communications via LTE.

The type B UEs may not be aware of the resource allocation used by the type C UEs to perform broadcast SL communications via LTE. The type B UEs may not be aware of sensing results from the type C UEs. The type C UEs may not be aware of the resource allocation used by the type B UEs to perform unicast SL communications via NR. The type C UEs may not be aware of sensing results from the type B UEs.

The resource allocation used by the type B UEs to perform unicast SL communications via NR and the resource allocation used by the type C UEs to perform broadcast SL communications via LTE may overlap causing a resource allocation conflict.

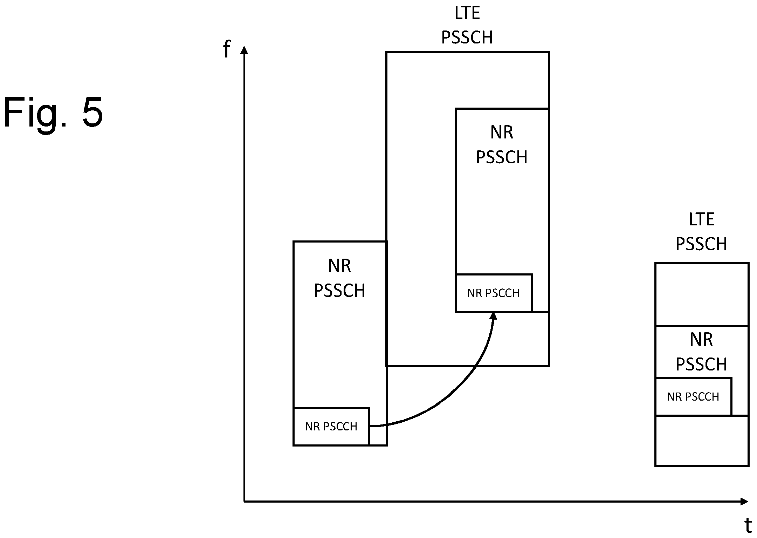

Figure 5 shows a schematic representation of a resource allocation conflict in an heterogeneous communication system.

Type B UEs and type C UEs may operate on a same carrier and the resource allocation used by type B UEs for performing SL communications via NR may overlap with the resource allocation used by type C UEs for performing SL communications via LTE.

Type B UEs and type C UEs may operate on a same carrier and the resource allocation used by type B UEs for performing SL communications via NR may overlap entirely or partially with the resource allocation used by type C UEs for performing SL communications via LTE.

Type B UEs and type C UEs may operate on a same carrier and the resource allocation used by type B UEs for performing SL communications via NR may overlap in the time domain or in the frequency domain with the resource allocation used by type C UEs for performing SL communications via LTE.

For example, the resource allocation used by type B UEs for sending a physical sidelink shared channel (PSSCH) and a physical sidelink control channel (PSCCH) via NR may fully or partially overlap with the resource allocation used by type C UEs for sending a PSSCH via LTE causing a resource allocation conflict

It must be understood although this disclosure address the problem of resource allocation conflict in a heterogeneous deployment comprising UEs performing SL communications via NR and UEs performing SL communications via LTE, similar techniques may be used to address the problem of resource allocation conflict in a heterogeneous deployment comprising UEs performing SL communications via NR and UEs performing SL communications via 6G or beyond or to address the problem of resource allocation conflict in a heterogeneous deployment comprising UEs performing SL communications via LTE and UEs performing SL communications via 6G or beyond.

The resource allocation used by the type B UEs to perform unicast SL communications via NR and the resource allocation used by the type C UEs to perform broadcast SL communications via LTE may be static, semi-static or dynamic.

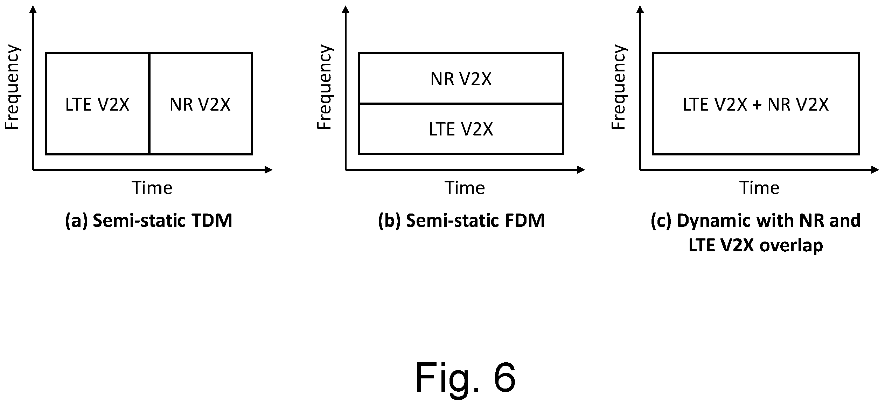

Figure 6 shows a schematic representation of static, semi-static or dynamic resource allocations to perform SL communications via NR and SL communications via LTE in a heterogeneous communication system (see R1-2205841).

Using static or semi-static resource allocation may be a simple solution to address the problem of resource allocation conflict. However, it does not provide flexibility and does not accommodate different load and/or traffic conditions for the SL communications via LTE and the SL communications via NR.

Using dynamic resource allocation may be a more complex solution to address the problem of resource allocation conflict. However, it provides flexibility and accommodates different load and/or traffic conditions for the SL communications via LTE and the SL communications via NR.

One or more aspects of this disclosure provides a mechanism using dynamic resource allocation to avoid resource allocation conflict.

One or more aspects of this disclosure provide a mechanism for sharing resource allocation and/or sensing results between UEs using incompatible radio access technologies (RATs) (e.g. LTE/ NR). UEs using incompatible RATs (e.g. LTE/ NR) may not perform direct SL communications with each other (i.e. over PC5). UEs using compatible RATs (e.g. LTE/ LTE or NR/NR) may perform direct SL communications with each other (e.g. over PC5).

One or more aspects of this disclosure provide a new logical function referred to as "SL manager".

The SL manager may be configured to determine a first SL resource allocation from a first module for performing SL communications via a first RAT (e.g. LTE) . The first SL resource allocation may be received from the first module. For example, the first SL resource allocation may be included in a first sidelink control information (SCI) or a first inter UE coordination (IUC) information received from the first module. The IUC information may be carried in SCI format 2C or MAC-CE. Alternatively, the first SL resource allocation may be derived from first sensing results received from the first module.

The SL manager may be configured to determine a second SL resource allocation from a second module for performing SL communication via a second RAT (e.g. NR). The second SL resource allocation may be received from the second module. For example, the second SL resource allocation may be included in a second SCI or a second IUC information received from the second module. The IUC information may be carried in SCI format 2C or MAC-CE. Alternatively, the second SL resource allocation may be derived from second sensing results received from the second module.

The SL manager may be configured to determine a resource allocation conflict based on the first SL resource allocation and the second SL resource allocation.

The SL manager may be configured to determine a need to address the resource allocation conflict. The SL manager may be configured to determine a need to address the resource allocation conflict based on a distance between receivers associated with the first module and the second module being below a (pre)configurable threshold. For example, the SL manager may be configured to determine that a distance between receivers associated with the first module and the second module based on basic safety messages or cooperative awareness messages received from the first module and the second module. These messages contain location information of the receivers associated with the first module and the second module.

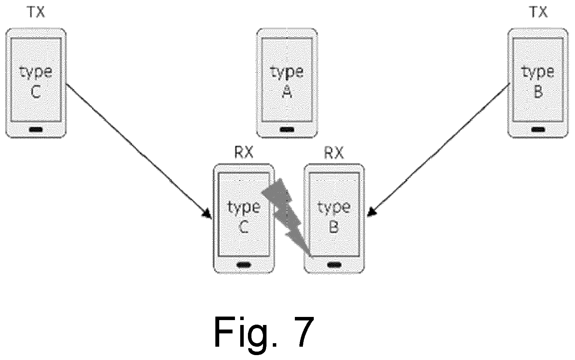

Figure 7 shows a schematic representation a heterogeneous communication system with a resource allocation conflict, when a distance between receivers associated with the first module and the second module is below a threshold.

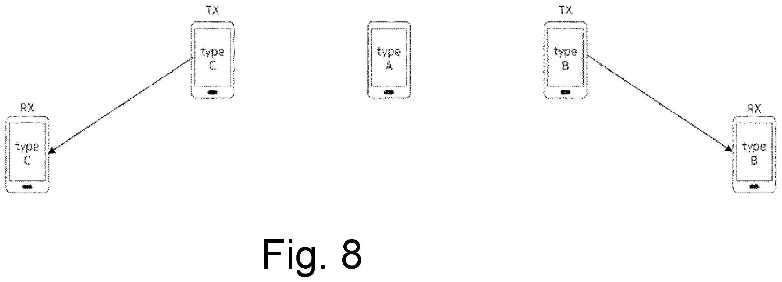

Figure 8 shows a schematic representation a heterogeneous communication system with a resource allocation conflict, when a distance between receivers associated with the first module and the second module is not below a threshold.

The SL manager may be configured to determine a need to address the resource allocation conflict based on an interference level experienced by receivers associated with the first module and the second module being above a threshold. The SL manager may determine an interference level experienced by receivers associated with the first module and the second module based on a reference signal received power (RSRP) measurement or reference signal received quality (RSRQ) measurement at the first module and the second module.

The SL manager may receive these measurements from the first module and the second module. The SL manager may be configured to determine a need to address the resource allocation conflict based on a probability of retransmission at the first module and the second module being above a threshold. The SL manager may determine need to address the resource allocation conflict based on a probability of retransmission at the first module and the second module based on a channel busy ratio at the first module and the second module. The channel busy ratio may define occupancy level of a SL frequency carrier (e.g. the percentage of used/reserved/allocated radio resources).

If the SL manager determines a need to address the resource allocation conflict, the SL manager may be configured to determine whether the first module should adjust the first SL resource allocation or the second module should adjust the second SL resource allocation to address the resource allocation conflict. The SL manager may be configured to determine whether the first module should adjust the first SL resource allocation or the second module should adjust the second SL resource allocation based on an inter RAT prioritization.

If the SL manager determines that the second module should adjust the second SL resource allocation to address the resource allocation conflict, the SL manager may be configured to convert the first SL resource allocation into a converted first SL resource allocation compatible with the second RAT. The SL manager may be configured to generate a first pseudo SCI or first pseudo IUC information including the converted first SL resource allocation and mimicking the second SCI or the second IUC information including the second SL resource allocation. For example, the first pseudo SCI or first pseudo IUC information has the same format as the second SCI or the second IUC information.

The first pseudo SCI or the first pseudo IUC information may comprise an indication that the first pseudo SCI or the first pseudo IUC information originates from the SL manager rather than from another first module. That is, the first module may be aware that the first pseudo SCI or the first pseudo IUC information is a first pseudo SCI or a first pseudo IUC information originating from the SL manager rather than an original SCI or original IUC information originating from another first module. The indication may comprise a flag (i.e. one bit indicator).

Alternatively, the first pseudo SCI or the first pseudo IUC information may not comprise an indication that the first pseudo SCI or the first pseudo IUC information originates from the SL manager rather than from another first module. That is, the first module may not be aware that the first pseudo SCI or the first pseudo IUC information is a first pseudo SCI or a first pseudo IUC information originating from the SL manager rather than an original SCI or original IUC information originating from another first module.

The SL manager may be configured to send the first pseudo SCI or first pseudo IUC information to the second module.

The second module may receive the first pseudo SCI or first pseudo IUC information from the SL manager. The second module may adjust the second SL resource allocation based on the converted first SL resource allocation. For example, the second module may exclude resources included in the second SL resource allocation that are included in the converted first SL resource allocation. The second module may use the adjusted second SL resource allocation to perform SL communication via the second RAT.

More specifically, the PHY layer of the second module may receive (directly or indirectly) the first pseudo SCI or first pseudo IUC information from the SL manager. The PHY layer may enable adjusting the second SL resource allocation based on the first pseudo SCI or first pseudo IUC information. The PHY layer of the second module may adjust the second SL resource allocation based on the converted first SL resource allocation and may send the adjusted second SL resource allocation to the MAC layer of the second module. The MAC layer of the second module may then select resources within the adjusted second SL resource allocation to use for performing SL communications via the second RAT.

Alternatively, the MAC layer of the second module may receive directly or indirectly) the first pseudo SCI or first pseudo IUC information from the SL manager. The MAC layer may enable adjusting the second SL resource allocation based on the first pseudo SCI or first pseudo IUC information. The MAC layer of the second module may adjust the second SL resource allocation based on the converted first SL resource allocation. The MAC layer of the second module may then select resources within the adjusted second SL resource allocation to use for performing SL communications via the second RAT.

If the SL manager determines that the first module should adjust the first SL resource allocation to address the resource allocation conflict, the SL manager may be configured to convert the second SL resource allocation into a converted second SL resource allocation compatible with the first RAT. The SL manager may be configured to generate a second pseudo SCI or second pseudo IUC information including the converted second SL resource allocation and mimicking the first SCI or the first IUC information including the first SL resource allocation. For example, the second pseudo SCI or second pseudo IUC information has the same format as the first SCI or the first IUC information.

The second pseudo SCI or the second pseudo IUC information may comprise an indication that the second pseudo SCI or the second pseudo IUC information originates from the SL manager rather than from another second module. That is, the second module may be aware that the second pseudo SCI or the second pseudo IUC information is a second pseudo SCI or a second pseudo IUC information originating from the SL manager rather than an original SCI or original IUC information originating from another second module. The indication may comprise a flag (i.e. one bit indicator).

Alternatively, the second pseudo SCI or the second pseudo IUC information may not comprise an indication that the second pseudo SCI or the second pseudo IUC information originates from the SL manager rather than from another second module. That is, the second module may not be aware that the second pseudo SCI or the second pseudo IUC information is a second pseudo SCI or a second pseudo IUC information originating from the SL manager rather than an original SCI or original IUC information originating from another second module.

The SL manager may be configured to send the second pseudo SCI or second pseudo IUC information to the first module.

The first module may receive the second pseudo SCI or second pseudo IUC information from the SL manager. The first module may adjust the first SL resource allocation based on the converted second SL resource allocation. For example, the first module may exclude resources included in the first SL resource allocation that are included in the converted second SL resource allocation. The first module may use the adjusted first SL resource allocation to perform SL communication via the first RAT.

More specifically, the PHY layer of the first module may receive (directly or indirectly) the second pseudo SCI or second pseudo IUC information from the SL manager. The PHY layer may enable adjusting the first SL resource allocation based on the second pseudo SCI or second pseudo IUC information. The PHY layer of the first module may adjust the first SL resource allocation based on the converted second SL resource allocation and may send the adjusted first SL resource allocation to the MAC layer of the first module. The MAC layer of the first module may then select resources within the adjusted first SL resource allocation to use for performing SL communications via the first RAT.

Alternatively, the MAC layer of the first module may receive directly or indirectly) the second pseudo SCI or second pseudo IUC information from the SL manager. The MAC layer may enable adjusting the first SL resource allocation based on the second pseudo SCI or second pseudo IUC information. The MAC layer of the first module may adjust the first SL resource allocation based on the converted second SL resource allocation. The MAC layer of the first module may then select resources within the adjusted first SL resource allocation to use for performing SL communications via the first RAT.

In a first implementation (inter-UE resource allocation conflict), the first module and the second module may be part of different UEs. The first module may be part of a first UE (e.g. type C UE) and the second module may be part of a second UE (e.g. type B UE). In this implementation, the first UE or the second UE may perform resource reselection to address the resource allocation conflict. The first UE or the second UE may be triggered to perform resource reselection to address the resource allocation conflict via an IUC scheme 2.

In IUC scheme 1, the IUC information sent from a UE to another UE is the preferred or non-preferred SL resource allocation for the other UE.

In IUC scheme 2, the IUC information sent from a UE to another UE is the presence of a resource conflict on the SL resource allocation indicated by the other UE.

The SL manager may be part of a third UE (e.g. type A UE) comprising a first module for performing SL communications via the first RAT and a second module for performing SL communications via the second RAT. The SL manager may be implemented in an application layer (e.g. vehicle to everything (V2X) layer). The first module may use a first resource allocation for performing SL communications via the first RAT. The second module may use a second resource allocation for performing SL communications via the second RAT. The first module and the second module may not share the first resource allocation and the second resource allocation at the physical layer (PHY) level or the medium access control (MAC) level. The first module and the second module may share the first resource allocation and the second resource allocation at the application layer.

Alternatively, the SL manager may be part of the 5GC. This may only be possible for SL resource allocation mode 1.

In a second implementation (intra-UE resource allocation conflict), the first module and the second module may be part of a same UE. The first module and the second module may be part of a UE (e.g. type A UE). In this implementation, the UE may perform resource reselection to address the resource allocation conflict.

The SL manager may be part of the same UE (e.g. type A UE) comprising the first module for performing SL communications via the first RAT and the second module for performing SL communications via the second RAT. The SL manager may be implemented in an application layer (e.g. vehicle to everything (V2X) layer). The first module may use a first resource allocation for performing SL communications via the first RAT. The second module may use a second resource allocation for performing SL communications via the second RAT. The first module and the second module may not share the first resource allocation and the second resource allocation at the physical layer (PHY) level or the medium access control (MAC) level. The first module and the second module may share the first resource allocation and the second resource allocation at the application layer.

Alternatively, the SL manager may be part of the 5GC. This may only be possible for SL resource allocation mode 1.

It will be understood that several modules may be deployed at the same time in a UE (e.g. a vehicle). In general, the product life cycle of a UE is longer than that of the modules and therefore it may happen that the modules need to be upgraded and changed occasionally.

Each module may send module properties to the SL manager. The module properties may comprise at least one of: a presence, a version, a RAT or capabilities. Upon reception of the module properties, the SL manager may know what kind of conversions may be needed. For example, a vehicle may comprise 4G modules and 5G modules initially but after upgrade the vehicle may comprise 6G modules. Therefore, the SL manager may need to convert between 4G, 5G and 6G RATs. It is expected that 4G will be phased out at some point in the future resulting into disposal of 4G modules. After the removal of 4G modules the SL manager may only need to convert between 5G and 6G RATs.

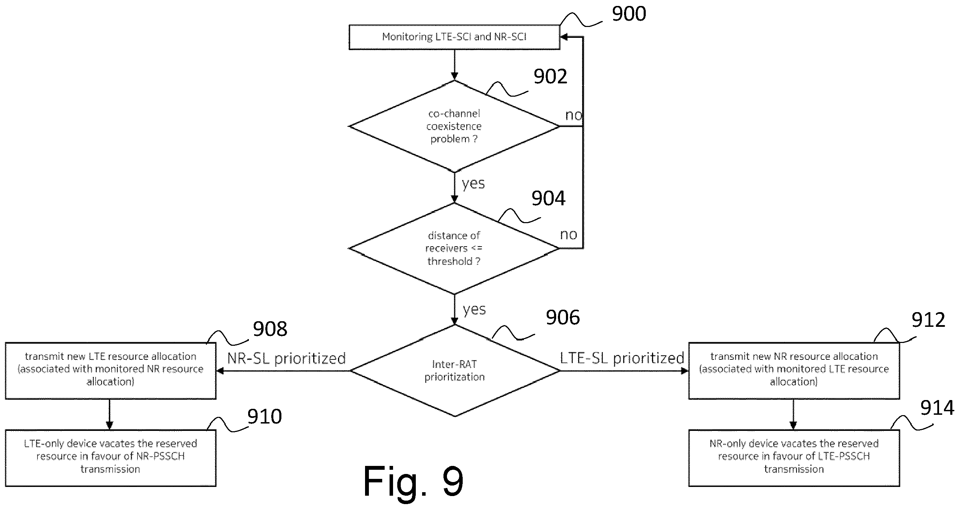

Figure 9 shows a chart of a process for managing sidelink communications in a heterogeneous communication system.

In step 900, a SL manager may monitor SCI. The SL manager may receive a LTE SCI from a first module for performing SL communications via LTE. LTE SCI may include a first SL resource allocation. The SL manager may receive a NR SCI from a second module for performing SL communications via NR. The NR SCI may include a second SL resource allocation.

In step 902, the SL manager may determine if there is a resource allocation problem (i.e. co-channel coexistence problem) based on the first SL resource allocation and the second SL resource allocation.

If the SL manager determines that there is a resource allocation problem (i.e. co-channel coexistence problem) based on the first SL resource allocation and the second SL resource allocation the process goes to step 904.

If the SL manager determines that there is not a resource allocation conflict (i.e. co-channel coexistence problem) based on the first SL resource allocation and the second SL resource allocation the process goes back to step 900.

In step 904, the SL manager may determine if there is a need to address the resource allocation conflict. The SL manager may determine if the distance between the receivers associated with the first module and the second module is below a threshold.

If the SL manager determines that there is a need to address the resource allocation conflict, the process goes to step 906.

If the SL manager determines that there is not a need to address the resource allocation problem, the process goes to step 900.
In step 906, the SL manager may determine if the first module should adjust the first SL resource allocation of if the second module should adjust the second SL resource allocation to address the resource allocation conflict based on a priority between the first module and the second module.

If the SL manager determines that the first module should adjust the first SL resource allocation to address the resource allocation conflict, the process goes to steps 908 and 910.

If SL manager determines that the second module should adjust the first SL resource allocation to address the resource allocation conflict, the process goes to steps 912 and 914.

In step 908, the SL manager may convert the second SL resource allocation into a converted second SL resource allocation and may send a pseudo LTE SCI including the converted second SL resource allocation to the first module.

In step 910, the first module may adjust the first resource allocation based on the converted second SL resource allocation. The first module may vacate resources of the first resource allocation that are included in the converted second SL resource allocation. The first module may use the adjusted first SL resource allocation to perform SL communications via LTE.

In step 912, the SL manager may convert the first SL resource allocation into a converted first SL resource allocation and may send a pseudo NR SCI including the converted first SL resource allocation to the second module.

In step 914, the second module may adjust the second resource allocation based on the converted first SL resource allocation. The second module may vacate resources of the second resource allocation that are included in the converted first SL resource allocation. The second module may use the adjusted second SL resource allocation to perform SL communications via NR.

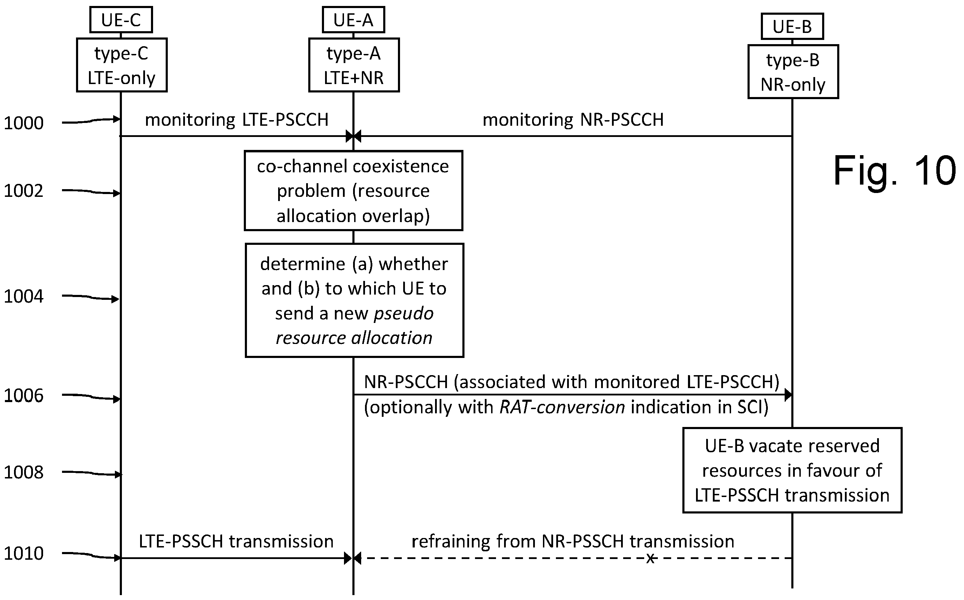

Figure 10 shows a signalling diagram of a method for managing sidelink communications in a heterogeneous communication system. A type A UE may include the SL manager, a first module for performing SL communication via NR and a second module for performing SL communication via LTE. A type B UE may include a first module for performing SL communication via NR. A type C UE may include a second module for performing SL communication via LTE.

In step 1000, a type A may monitor SCI from neighbouring UEs. The type A UE may receive a LTE SCI from a type C UE. The LTE SCI may include a first SL resource allocation. The SL manager may receive a NR SCI from a type B UE. The NR SCI may include a second SL resource allocation.

In step 1002, the type A UE may determine if there is a resource allocation problem (i.e. co-channel coexistence problem) based on the first SL resource allocation and the second SL resource allocation.

In step 1004(a), the type A UE may determine that there is a need to address the resource allocation conflict.

In step 1004(b), the type A UE may determine that the type C UE has priority and therefore that the type B should adjust the second SL resource allocation.

In step 1006, the type A UE may convert the first SL resource allocation into a converted first SL resource allocation. The type A UE may send a NR physical sidelink control channel (PSCCH) to the type B UE. The PSCCH may comprise a pseudo NR SCI including the converted first resource allocation. The pseudo NR SCI may comprise an indication that the pseudo NR SCI is a pseudo NR SCI originating from the type A UE rather than an original NR SCI originating from another type B UE.

In step 1008, the type B UE may adjust the second SL resource allocation based on the converted first SL resource allocation. The type B UE may vacate resources of the second SL resource allocation that are included in the converted first SL resource allocation. The type B UE may use the adjusted second SL resource allocation to perform SL communications via NR on the NR physical sidelink shared channel (PSSCH). Here, the type B UE may vacate all resources of the second SL resource allocation and therefore the type B UE may stop performing SL communications via NR on the NR PSSCH.

In step 1010, the type B UE may continue performing SL communications via LTE on the LTE PSSCH using the first SL resource allocation.

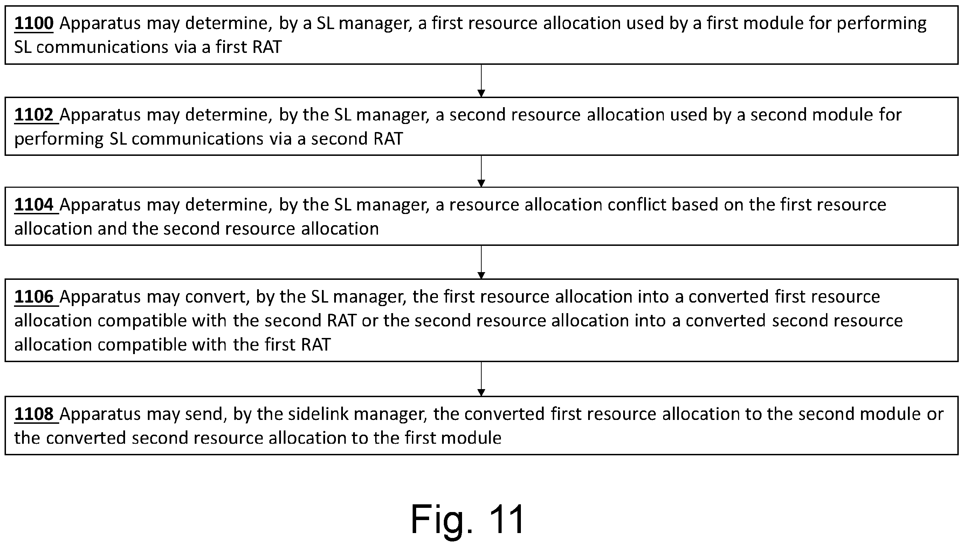

Figure 11 shows a block diagram of a method for managing SL communications in a heterogeneous communication system. The method may be performed by an apparatus, such as a CN element or a type A UE. The apparatus may comprise a SL manager.

In step 1100, the apparatus, may determine, by the SL manager, a first resource allocation used by a first module for performing SL communications via a first RAT.

In step 1102, the apparatus may determine, by the SL manager, a second resource allocation used by a second module for performing SL communications via a second RAT.

In step 1104, the apparatus may determine, by the SL manager, a resource allocation conflict based on the first resource allocation and the second resource allocation.

In step 1106, the apparatus may convert, by the SL manager, the first resource allocation into a converted first resource allocation compatible with the second RAT or the second resource allocation into a converted second resource allocation compatible with the first RAT.

In step 1108, the apparatus may send, by the SL manager, the converted first resource allocation to the second module or the converted second resource allocation to the first module.

The apparatus may be CN element. The apparatus may be a UE capable of performing SL communications via the first RAT and capable of performing SL communications via the second RAT.

The first module and the second module may be part of the apparatus.

The first module may be part of a first apparatus capable of performing SL communications via the first RAT and not capable of performing SL communications via the second RAT. The second module may be part of a second apparatus not capable of performing SL communications via the first RAT and capable of performing SL communications via the second RAT.

The first RAT may comprise LTE.

The second RAT may comprise NR.

The first resource allocation may be received from the first module in first SCI or first IUC information or derived from sensing results from the first module. The second resource allocation may be received from the second module in second SCI or second IUC information or derived from sensing results from the second module.

The apparatus may generate, by the SL manager, a first pseudo SCI or a first pseudo IUC information including the converted first resource allocation. The apparatus may generate, by the SL manager, a second pseudo SCI or a second pseudo IUC information including the converted second resource allocation.

The first pseudo SCI or the first pseudo IUC information may mimic the second SCI or the second IUC information. That is, the first pseudo SCI or the first pseudo IUC information may appear to have been sent from the second module. For example, the first pseudo SCI or the first pseudo IUC information may have the same format as the second SCI or the second IUC information.

The second pseudo SCI or the second pseudo IUC information may mimic the first SCI or the first IUC information. That is, the second pseudo SCI or the second pseudo IUC information may appear to have been sent from the first module. For example, the second pseudo SCI or the second pseudo IUC information may have the same format as the first SCI or the first IUC information.

The first pseudo SCI or the first pseudo IUC information may not comprise an indication that the first pseudo SCI or the first pseudo IUC information originates from the apparatus. The second pseudo SCI or the second pseudo IUC information may not comprise an indication that the second pseudo SCI or the second pseudo IUC information originates from the apparatus.

That is, the first module may not be aware that the first pseudo SCI or the first pseudo IUC information is a pseudo SCI or pseudo IUC information originating from the apparatus rather than an original SCI or IUC information originating from another first module.

The second module may not be aware that the second pseudo SCI or the second pseudo IUC information is a pseudo SCI or pseudo IUC information originating from the apparatus rather than an original SCI or IUC information originating from another second module.

The first pseudo SCI or the first pseudo IUC information may comprise an indication that the first pseudo SCI or the first pseudo IUC information originates from the apparatus rather than from another first module. The second pseudo SCI or the second pseudo IUC information may comprise an indication that the second pseudo SCI or the second pseudo IUC information originates from the apparatus rather than from another second module.

That is, the first module may be aware that the first pseudo SCI or the first pseudo IUC information is a pseudo SCI or pseudo IUC information originating from the apparatus rather than an original SCI or IUC information originating from another first module.

The second module may be aware that the second pseudo SCI or the second pseudo IUC information is a pseudo SCI or pseudo IUC information originating from the apparatus rather than an original SCI or IUC information originating from another second module.

The indication may be conveyed via a flag (single bit indicator).

The apparatus may sending, by the SL manager, the first pseudo SCI or the first pseudo IUC information to the second module. The apparatus may send, by the SL manager, the second pseudo SCI or the second pseudo IUC information to the first module.

The apparatus may determine, by the SL manager, a need to address the resource allocation conflict based on at least one of: a distance between receivers associated with the first module and the second module, an interference level experienced by receivers associated with the first module and the second module or a probability of retransmission at the first module and the second module. The apparatus may convert, by the SL manager, the first resource allocation or the second resource allocation in response to determining the need to address the resource allocation conflict.

The apparatus may determine whether to convert the first resource allocation or the second resource allocation in response to determining the need to address the resource allocation conflict based on a priority between the first module and the second module.

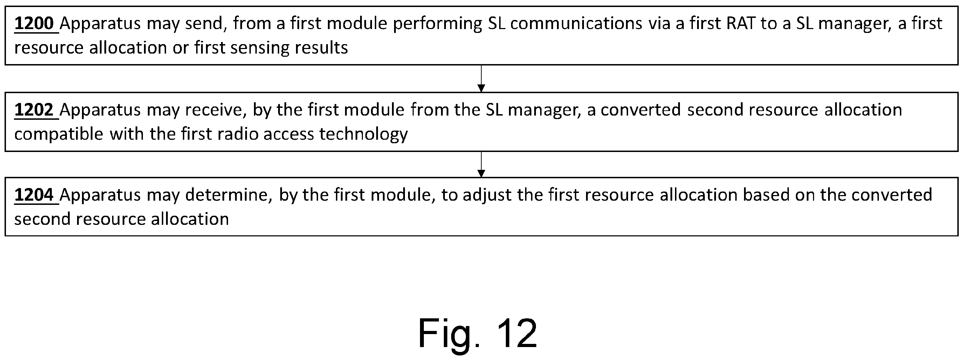

The apparatus may determine, by the SL manager, the distance between receivers associated with the first module and the second module based on basic safety messages or cooperative awareness messages received from the first module and the second module. Figure 12 shows a block diagram of a method for managing SL communications in a heterogeneous communication system. The method may be performed by an apparatus, such as a type A UE, a type B UE or a type CUE.

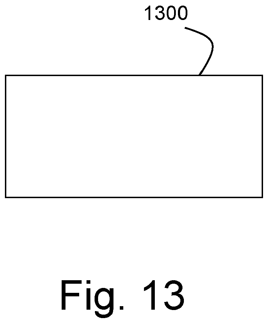

Figure 13 shows a schematic representation of non-volatile memory media 1300 storing instructions and/or parameters which when executed by a processor allow the processor to perform one or more of the steps of the methods of Figures 11 and 12.

In step 1300, the apparatus may send, from a first module performing SL communications via a first RAT to a SL manager, a first resource allocation or first sensing results.

In step 1302, the apparatus may receive, by the first module from the SL manager, a converted second resource allocation compatible with the first RAT.

In step 1304, the apparatus may determine, by the first module, to adjust the first resource allocation based on the converted second resource allocation.

The apparatus may be a UE capable of performing SL communications via the first RAT and capable of performing SL communications via the second RAT. The apparatus may be a UE capable of performing SL communications via the first RAT and not capable of performing SL communications via the second RAT.

The apparatus may adjust, by the first module, the first resource allocation based on the converted second resource allocation. The apparatus may use, by the first module, the adjusted first resource allocation.

Adjusting the first resource allocation based on the converted second resource allocation may comprise excluding resources from the first resource allocation that are included in the converted second resource allocation.

It is noted that while the above describes example embodiments, there are several variations and modifications which may be made to the disclosed solution without departing from the scope of the present invention.

It will be understood that although the above concepts have been discussed in the context of LTE and 5G, one or more of these concepts may be applied to other cellular systems, in particular 6G and beyond.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 11 and 12, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for determining, by a sidelink manager, a first resource allocation used by a first module for performing sidelink communications via a first radio access technology;
means for determining, by the sidelink manager, a second resource allocation used by a second module for performing sidelink communications via a second radio access technology;
means for determining, by the sidelink manager, a resource allocation conflict based on the first resource allocation and the second resource allocation;
means for converting, by the sidelink manager, the first resource allocation into a converted first resource allocation compatible with the second radio access technology or the second resource allocation into a converted second resource allocation compatible with the first radio access technology; and
means for sending, by the sidelink manager, the converted first resource allocation to the second module or the converted second resource allocation to the first module.

2. The apparatus of claim 1, wherein the apparatus is a core network element; or
wherein the apparatus is a user equipment capable of performing sidelink communications via the first radio access technology and capable of performing sidelink communications via the second radio access technology.

3. The apparatus of claim 2, wherein the first module and the second module are part of the apparatus.

4. The apparatus of claim 2, wherein the first module is part of a first apparatus capable of performing sidelink communications via the first radio access technology and not capable of performing sidelink communications via the second radio access technology; and
wherein the second module is part of a second apparatus not capable of performing sidelink communications via the first radio access technology and capable of performing sidelink communications via the second radio access technology.

5. The apparatus of claim 4, wherein the first resource allocation is received from the first module in first sidelink control information or first inter-user equipment coordination information or derived from sensing results from the first module; and/or
wherein the second resource allocation is received from the second module in second sidelink control information or second inter-user equipment coordination information or derived from sensing results from the second module.

6. The apparatus of claim 5, comprising:
means for generating, by the sidelink manager, a first pseudo sidelink control information or a first pseudo inter-user equipment coordination information including the converted first resource allocation; or
means for generating, by the sidelink manager, a second pseudo sidelink control information or a second pseudo inter-user equipment coordination information including the converted second resource allocation.

7. The apparatus of claim 6, wherein the first pseudo sidelink control information or the first pseudo inter-user equipment coordination information does not comprise an indication that the first pseudo sidelink control information or the first pseudo inter-user equipment coordination information originates from the apparatus; or
wherein the second pseudo sidelink control information or the second pseudo inter-user equipment coordination information does not comprise an indication that the second pseudo sidelink control information or the second pseudo inter-user equipment coordination information originates from the apparatus.

8. The apparatus of claim 6, wherein the first pseudo sidelink control information or the first pseudo inter-user equipment coordination information comprises an indication that the first pseudo sidelink control information or the first pseudo inter-user equipment coordination information originates from the apparatus rather than from another first module; or
wherein the second pseudo sidelink control information or the second pseudo inter-user equipment coordination information comprises an indication that the second pseudo sidelink control information or the second pseudo inter-user equipment coordination information originates from the apparatus rather than from another second module.

9. The apparatus of any of claims 6 to 8, comprising:
means for sending, by the sidelink manager, the first pseudo sidelink control information or the first pseudo inter-user equipment coordination information to the second module; or
means for sending, by the sidelink manager, the second pseudo sidelink control information or the second pseudo inter-user equipment coordination information to the first module.

10. The apparatus of any of claims 1 to 9, comprising:
means for determining, by the sidelink manager, a need to address the resource allocation conflict based on at least one of: a distance between receivers associated with the first module and the second module, an interference level experienced by receivers associated with the first module and the second module or a probability of retransmission at the first module and the second module; and
means for converting, by the sidelink manager, the first resource allocation or the second resource allocation in response to determining the need to address the resource allocation conflict.

11. The apparatus of any of claims 1 to 10, comprising:
means for determining whether to convert the first resource allocation or the second resource allocation in response to determining the need to address the resource allocation conflict based on a priority between the first module and the second module.

12. An apparatus comprising:
means for sending, from a first module performing sidelink communications via a first radio access technology to a sidelink manager, a first resource allocation or first sensing results;
means for receiving, by the first module from the sidelink manager, a converted second resource allocation compatible with the first radio access technology; and
means for determining, by the first module, to adjust the first resource allocation based on the converted second resource allocation.

13. The apparatus of claim 12, comprising:
means for adjusting, by the first module, the first resource allocation based on the converted second resource allocation; and
means for using, by the first module, the adjusted first resource allocation.

14. A method comprising:
determining, by a sidelink manager, a first resource allocation used by a first module for performing sidelink communications via a first radio access technology;
determining, by the sidelink manager, a second resource allocation used by a second module for performing sidelink communications via a second radio access technology;
determining, by the sidelink manager, a resource allocation conflict based on the first resource allocation and the second resource allocation;
converting, by the sidelink manager, the first resource allocation into a converted first resource allocation compatible with the second radio access technology or the second resource allocation into a converted second resource allocation compatible with the first radio access technology; and
sending, by the sidelink manager, the converted first resource allocation to the second module or the converted second resource allocation to the first module.

15. A method comprising:
sending, from a first module performing sidelink communications via a first radio access technology to a sidelink manager, a first resource allocation or first sensing results;
receiving, by the first module from the sidelink manager, a converted second resource allocation compatible with the first radio access technology; and
determining, by the first module, to adjust the first resource allocation based on the converted second resource allocation.

## Amended claims

### Amended claims in accordance with Rule 137(2) EPC.

1. A sidelink manager comprising:
means for determining (1100) a first resource allocation used by a first module part of a first apparatus capable of performing sidelink communications via a first radio access technology and not capable of performing sidelink communications via a second radio access technology;
means for determining (1102) a second resource allocation used by a second module part of a second apparatus not capable of performing sidelink communications via the first radio access technology and capable of performing sidelink communications via the second radio access technology;
means for determining (1104) a resource allocation conflict based on the first resource allocation and the second resource allocation;
means for converting (1106) the first resource allocation into a converted first resource allocation compatible with the second radio access technology or the second resource allocation into a converted second resource allocation compatible with the first radio access technology; and
means for sending (1108) the converted first resource allocation to the second module or the converted second resource allocation to the first module.

2. The sidelink manager of claim 1, wherein the sidelink manager is a core network element; or
wherein the sidelink manager is a user equipment capable of performing sidelink communications via the first radio access technology and capable of performing sidelink communications via the second radio access technology.

3. The sidelink manager of claim 1, wherein the first resource allocation is received from the first module in first sidelink control information or first inter-user equipment coordination information or derived from sensing results from the first module; and/or
wherein the second resource allocation is received from the second module in second sidelink control information or second inter-user equipment coordination information or derived from sensing results from the second module.

4. The sidelink manager of claim 3, comprising:
means for generating, by the sidelink manager, a first pseudo sidelink control information or a first pseudo inter-user equipment coordination information including the converted first resource allocation; or
means for generating, by the sidelink manager, a second pseudo sidelink control information or a second pseudo inter-user equipment coordination information including the converted second resource allocation.

5. The sidelink manager of claim 4, wherein the first pseudo sidelink control information or the first pseudo inter-user equipment coordination information does not comprise an indication that the first pseudo sidelink control information or the first pseudo inter-user equipment coordination information originates from the apparatus; or
wherein the second pseudo sidelink control information or the second pseudo inter-user equipment coordination information does not comprise an indication that the second pseudo sidelink control information or the second pseudo inter-user equipment coordination information originates from the apparatus.

6. The sidelink manager of claim 4, wherein the first pseudo sidelink control information or the first pseudo inter-user equipment coordination information comprises an indication that the first pseudo sidelink control information or the first pseudo inter-user equipment coordination information originates from the apparatus rather than from another first module; or
wherein the second pseudo sidelink control information or the second pseudo inter-user equipment coordination information comprises an indication that the second pseudo sidelink control information or the second pseudo inter-user equipment coordination information originates from the apparatus rather than from another second module.

7. The sidelink manager of any of claims 4 to 6, comprising:
means for sending, by the sidelink manager, the first pseudo sidelink control information or the first pseudo inter-user equipment coordination information to the second module; or
means for sending, by the sidelink manager, the second pseudo sidelink control information or the second pseudo inter-user equipment coordination information to the first module.

8. The sidelink manager of any of claims 1 to 7, comprising:
means for determining, by the sidelink manager, a need to address the resource allocation conflict based on at least one of: a distance between receivers associated with the first module and the second module, an interference level experienced by receivers associated with the first module and the second module or a probability of retransmission at the first module and the second module; and
means for converting, by the sidelink manager, the first resource allocation or the second resource allocation in response to determining the need to address the resource allocation conflict.

9. The sidelink manager of any of claims 1 to 8, comprising:
means for determining whether to convert the first resource allocation or the second resource allocation in response to determining the need to address the resource allocation conflict based on a priority between the first module and the second module.

10. A first apparatus comprising:
means for sending (1200), from a first module part of the first apparatus capable of performing sidelink communications via a first radio access technology to a sidelink manager and not capable of performing sidelink communications via a second radio access technology, a first resource allocation or first sensing results;
means for receiving (1202), by the first module from the sidelink manager, a converted second resource allocation compatible with the first radio access technology; and
means for determining (1204), by the first module, to adjust the first resource allocation based on the converted second resource allocation.

11. The first apparatus of claim 10, comprising:
means for adjusting, by the first module, the first resource allocation based on the converted second resource allocation; and
means for using, by the first module, the adjusted first resource allocation.

12. A method comprising:
determining (1100), by a sidelink manager, a first resource allocation used by a first module part of a first apparatus capable of performing sidelink communications via a first radio access technology and not capable of performing sidelink communications via a first radio access technology ;
determining (1102), by the sidelink manager, a second resource allocation used by a second module part of a second apparatus not capable of performing sidelink communications via the first radio access technology and capable of performing sidelink communications via the second radio access technology;
determining (1104), by the sidelink manager, a resource allocation conflict based on the first resource allocation and the second resource allocation;
converting (1106), by the sidelink manager, the first resource allocation into a converted first resource allocation compatible with the second radio access technology or the second resource allocation into a converted second resource allocation compatible with the first radio access technology; and
sending (1108), by the sidelink manager, the converted first resource allocation to the second module or the converted second resource allocation to the first module.

13. A method comprising:
sending (1200), from a first module part of a first apparatus capable of performing sidelink communications via a first radio access technology to a sidelink manager and not capable of performing sidelink communications via a second radio access technology, a first resource allocation or first sensing results;
receiving (1202), by the first module from the sidelink manager, a converted second resource allocation compatible with the first radio access technology; and
determining (1204), by the first module, to adjust the first resource allocation based on the converted second resource allocation.
